# EUROPEAN PATENT SPECIFICATION

(11) **EP 2 671 931 B1**
(45) Date of publication and mention of the grant of the patent: **20.03.2019**
(21) Application number: 12801408.1
(22) Date of filing: 14.06.2012
(51) Int. Cl.: C09J 175/06

(54) **HIGH-SOLID ADHESIVE COMPOSITION**
HOCHFESTE KLEBSTOFFZUSAMMENSETZUNG
COMPOSITION ADHÉSIVE À TENEUR ÉLEVÉE EN MATIÈRES SOLIDES

(30) Priority: 17.06.2011 JP 2011135146
(43) Date of publication of application: 11.12.2013
(73) Proprietor: DIC Graphics Corporation, Tokyo 103-8233 (JP)
(72) Inventor: KIMURA Ryouji, Tokyo 174-8520 (JP); OSANAI Kiyoshi, Tokyo 174-8520 (JP); HAMASUNA Yutaka, Tokyo 174-8520 (JP)
(74) Representative: Adam, Holger
(86) International application number: PCT/JP2012/065227
(87) International publication number: WO 2012/173182

(56) References cited:
- WO-A1-2011/162160
- JP-A- 2003 013 032
- JP-A- 2003 129 024
- JP-A- 2003 129 024
- JP-A- 2007 146 162
- JP-A- 2008 045 101
- JP-A- 2010 023 379

## Description

### Technical Field

The present invention relates to a high-solid adhesive composition, in particular, relates to a high-solid adhesive composition contained in adhesives used for bonding plastic films, metallic foil, paper sheets, and other materials for food packaging and industrial applications.

### Background Art

Laminating adhesives have been widely used to bond materials to be laminated, such as a variety of films, metallic foil, and sheets, to impart designability, functionality, a preserving property, convenience, and transportability to food packages and industrial products.

Soft packaging converters are facing recent changes in the soft packaging industry, such as discharge regulations concerning VOCs due to an amendment in the Air Pollution Control Law and a required reduction in CO₂ emission in accordance with carbon footprint (visualization) as part of a life cycle assessment. Hence, development of a laminating adhesive which can contribute to resource and energy conservation and a reduction in costs has been demanded.

Studies on solventless adhesives and high-solid adhesives for developing a laminating adhesive which enables resource and energy conservation and a reduction in costs have been drawing attention. A two-part curable composition for a solvent-based laminating adhesive is known, the composition containing a polyol component as a primary ingredient and a polyisocyanate component as a curing agent (for example, see Patent Literature 1). In general, solventless adhesives exhibit small initial cohesion as compared with solvent adhesives, have problems, such as easily causing unsightly appearance, and involve use of a specialized machine; thus, solventless adhesives have not been widely used. A high-solid adhesive having improvements in initial cohesion and physical properties after being cured is known and can be applied with a solid content of up to 40% (e.g., see Patent Literature 2); however, the present invention aims to provide a high-solid adhesive with a higher solid content. In order to perform application of an adhesive having a high solid content, the molecular weight of an adhesive resin needs to be further reduced; in this case, the initial adhesion immediately after a lamination process becomes significantly decreased, and problems are caused, such as the occurrence of tunneling (defective bonding of films) and a decrease in pot life (usable life after addition of a curable agent) due to the high solid content. An adhesive containing a liquid mixture with a solid content of not less than 50%, exhibiting high initial adhesion immediately after a lamination process and high adhesion in a normal state, and exhibiting excellent boiling and retort resistance is still under development.

The study of the present invention has been carried out to provide a two-part curable composition for a laminating adhesive and a lamination technique involving use of the two-part curable composition, the two-part curable composition being capable of being applied with not less than 50 mass% of a nonvolatile content, having an initial adhesion that prevents the occurrence of tunneling after a lamination process, having high adhesion in a normal state, and being free from problems such as delamination after high-temperature sterilization such as boiling and retorting treatments.

Patent Literature 1: Japanese Unexamined Patent Application Publication No. 2003-129024
Patent Literature 2: Japanese Unexamined Patent Application Publication No. 2005-298588

### Summary of Invention

### Problems to be Solved by the Invention

It is an object of the present invention to provide a two-part curable composition for a laminating adhesive and a lamination technique involving use of the two-part curable composition, the two-part curable composition being capable of being applied with not less than 50 mass% of a nonvolatile content, exhibiting excellent laminating properties, and being free from problems such as delamination after high-temperature sterilization such as boiling and retorting treatments.

### Means for Solving the Problems

It has been found that the above-mentioned object is achieved by a two-part curable composition for a laminating adhesive, the two-part curable composition containing a polyol polyol component as a primary ingredient and a polyisocyanate component as a curing agent, the primary ingredient being a certain amount of a specific polyester polyol. The present invention has been accomplished through this finding.

In particular, the present invention provides a two-part curable composition for a laminating adhesive, the two-part curable composition being capable of being applied with not less than 50 mass% of a nonvolatile content, comprising a polyester polyol component as a primary ingredient and a polyisocyanate component as a curing agent, wherein the polyester polyol component is synthesized from at least any one of a polycarboxylic acid and a polycarboxylic anhydride, contains an aromatic ring derived from at least any one of orthophthalic acid and phthalic anhydride (hereinafter referred to as "OPA") in an amount of not less than 2.0 millimoles per gram (hereinafter denoted by the units "mmol/g") of solid content, and has a number-average molecular weight of not more than 4000.

### Advantages

According to the present invention, there is provided a two-part curable composition for a laminating adhesive and a lamination technique involving use of the two-part curable composition, the two-part curable composition being capable of being applied with not less than 50 mass% of a nonvolatile content, having an initial adhesion that prevents the occurrence of tunneling after a lamination process, and being free from problems such as delamination after high-temperature sterilization such as boiling and retorting treatments.

### Description of Embodiments

The present invention will now be described in detail.

The two-part curable composition for a laminating adhesive of the present invention contains a polyester polyol component as a primary ingredient and a polyisocyanate component as a curing agent; the polyester polyol component as the primary ingredient is synthesized from a polycarboxylic acid or a polycarboxylic anhydride and contains an aromatic ring derived from orthophthalic acid or phthalic anhydride (OPA) in an amount of not less than 2.0 mmol per gram of solid content, and the polyester polyol component as the primary ingredient has a number-average molecular weight of not more than 4000.

The two-part curable composition for a laminating adhesive of the present invention is used in a technical field of dry lamination in which an adhesive applied to a surface of a material is dried to evaporate a solvent and then another material is laminated thereon while being heated with application of pressure.

The two-part curable composition for a laminating adhesive of the present invention enables bonding of appropriate films without restriction and enables production of laminated films having characteristics suitable for applications; thus, such a two-part curable composition can be widely used in the production of materials for food packaging which need to have high quality.

The two-part curable composition for a laminating adhesive of the present invention needs to satisfy the following requirements: (1) initial adhesion for preventing tunneling that is defective bonding caused immediately after a lamination process, (2) high adhesion to various plastic films, metallized films, and metallic foil in a normal state, and (3) high boiling and retort resistance for preventing the occurrence of delamination during high-temperature sterilization such as boiling and retorting treatments. In order to satisfy these requirements, a two-part curable polyurethane adhesive containing a primary ingredient and a curing agent is used as an adhesive for dry lamination.

The two-part curable composition for a laminating adhesive of the present invention contains a polyester polyol component as the primary ingredient.

In particular, orthophthalic acid or phthalic anhydride (OPA) is used as a starting material of polyester polyol that is the primary ingredient of the two-part curable composition for a laminating adhesive of the present invention.
Orthophthalic acid is 1,2-benzenedicarboxylic acid.
Phthalic anhydride (OPA) is 1,2-benzenedicarboxylic acid anhydride.
Use of orthophthalic acid or phthalic anhydride (OPA) as a starting material in the synthesis of polyester can decrease the viscosity of the composition without a reduction in the initial cohesion of the composition. In addition, pot life (usable life) after addition of a curing agent (described later) can be prolonged as compared with a case in which isophthalic acid (IPA) or terephthalic acid (TPA), which are typically employed, is used.
Furthermore, a polyester resin synthesized from phthalic anhydride (OPA) exhibits weak intermolecular interaction in a solvent as compared with a polyester resin synthesized from IPA or TPA, leading to a decrease in the viscosity of the composition.

The polyester polyol component as the primary ingredient is synthesized from a polycarboxylic acid or a polycarboxylic anhydride and contains an aromatic ring derived from orthophthalic acid or phthalic anhydride (OPA) in an amount of not less than 2.0 mmol, and preferably 2.5 to 4.5 mmol per gram of solid content; the polyester polyol component preferably has a number-average molecular weight of not more than 4000. The polyester polyol component synthesized from a polycarboxylic acid or a polycarboxylic anhydride and containing an aromatic ring (2.0 mmol per gram of solid content) derived from orthophthalic acid or phthalic anhydride (OPA) can maintain a polyol solution in a stable state without crystallization and at a preferred viscosity; moreover, such a polyester polyol component imparts strength to a laminated film formed through lamination with the adhesive composition and imparts boiling and retort resistances to a pouch produced from the laminated film. The polyester polyol component synthesized from a polycarboxylic acid or a polycarboxylic anhydride and containing an aromatic ring (2.5 to 4.5 mmol per gram of solid content) derived from orthophthalic acid or phthalic anhydride (OPA) further enhances the initial shear strength immediately after a lamination process and adhesion in a normal state after aging of a laminate; furthermore, such a polyester polyol component also contributes to an enhancement in the boiling and retort resistances of a pouch produced with the adhesive composition.

Generally employed curing agents can be used as the curing agent contained in the two-part curable composition for a laminating adhesive of the present invention; examples of such a curing agent include polyfunctional organic polyisocyanate having a bonding structure such as an adduct produced as a result of adding organic diisocyanate (3 mol) to trimethylolpropane (1 mol), a biuret produced as a result of a reaction of water (1 mol) with organic diisocyanate (3 mol), or an isocyanurate produced through polymerization of organic diisocyanate (3 mol); and polyurethane polyisocyanate compounds obtained by a reaction of polyester polyol, polyether polyol, and optionally low-molecular-weight polyol with polyisocyanate.

In the case where the viscosity of a mixture of the primary ingredient and the curing agent with a solid content of not less than 50% is measured at 25°C with a #3 Zahn cup, a result of the measurement is preferably in the range of 13 to 30 seconds, and more preferably 13 to 20 seconds.

The polyester resin contained in the two-part curable composition for a laminating adhesive of the present invention is synthesized through a reaction of a polybasic acid with a polyhydric alcohol and contains orthophthalic acid or phthalic anhydride (OPA) as aromatic acid in an amount of not less than 2.0 mmol per gram of solid content; and the polyester resin has a number-average molecular weight of not more than 4000. Any other known polybasic acid can be also used.

Examples of the known polybasic acids include succinic acid, adipic acid, azelaic acid, sebacic acid, dodecanedicarboxylic acid, maleic anhydride, fumaric acid, 1,3-cyclopentanedicarboxylic acid, 1,4-cyclohexanedicarboxylic acid, terephthalic acid, isophthalic acid, phthalic acid, 1,4-naphthalenedicarboxylic acid, 2, 5-naphthalenedicarboxylic acid, 2,6-naphthalenedicarboxylic acid, naphthalic acid, biphenyldicarboxylic acid, 1,2-bis(phenoxy)ethane-p,p'-dicarboxylic acid, and anhydrides or ester-forming derivatives of these dicarboxylic acids; and p-hydroxybenzoic acid, p-(2-hydroxyethoxy)benzoic acid, and ester-forming derivatives or dimer acids of these dihydroxycarboxylic acids. These polybasic acids may be used alone or in combination.

Any known polyhydric alcohol can be used. Specific examples of a polyhydric alcohol include glycols such as ethylene glycol, propylene glycol, 1,3-propanediol, 1,4-butanediol, 1,5-pentanediol, 3-methyl-1,5-pentanediol, 1,6-hexanediol, neopentylglycol, methylpentanediol, dimethylbutanediol, butylethylpropanediol, diethylene glycol, triethylene glycol, tetraethylene glycol, dipropylene glycol, tripropylene glycol, bishydroxyethoxybenzene, 1,4-cyclohexanediol, 1,4-cyclohexanedimethanol, triethylene glycol, polycaprolactone diol, dimer diol, bisphenol A, and hydrogenated bisphenol A; polyesters produced through ring opening polymerization of cyclic ester compounds, such as propiolactone, butyrolactone, ε-caprolactone, δ-valerolactone, and β-methyl-δ-valerolactone; and polyethers produced from addition polymerization of one or more monomers including ethylene oxide, propylene oxide, butylene oxide, styrene oxide, epichlorohydrin, tetrahydrofuran, and cyclohexylene in the usual manner with the aid of one or more compounds containing two active hydrogen atoms as an initiator, e.g., ethylene glycol, diethylene glycol, triethylene glycol, propylene glycol, trimethylene glycol, 1,3-butanediol, 1,4-butanediol, 1,6-hexanediol, and neopentylglycol. These polyhydric alcohols may be used alone or in combination.

The two-part curable laminating adhesive of the present invention may also contain an adhesion promoter. Examples of the adhesion promoter include coupling agents such as a silane coupling agent, a titanate coupling agent, and an aluminate coupling agent; and epoxy resin.
Examples of the silane coupling agent include aminosilane such as γ-aminopropyltriethoxysilane, γ-aminopropyltrimethoxysilane, N-β(aminoethyl)-γ-aminopropyltrimethoxysilane, N-β(aminoethyl)-γ-aminopropyltrimethyl dimethoxysilane, and N-phenyl-γ-aminopropyltrimethoxysilane; epoxysilane such as β-(3,4-epoxycyclohexyl)-ethyltrimethoxysilane, γ-glycidoxypropyltrimethoxysilane, and γ-glycidoxypropyltriethoxysilane; vinylsilane such as vinyl tris(β-methoxyethoxy)silane, vinyltriethoxysilane, vinyltrimethoxysilane, and γ-methacryloxypropyltrimethoxysilane; hexamethyldisilazane; and γ-mercaptopropyltrimethoxysilane.

Examples of the titanate coupling agent include tetraisopropoxy titanium, tetra-n-butoxy titanium, butyl titanate dimer, tetrastearyl titanate, titanium acetylacetonate, titanium lactate, tetraoctyleneglycol titanate, titanium lactate, and tetra stearoxy titanium.

Examples of the epoxy resin include a variety of commercially available epoxy resins such as bisphenol A-epichlorohydrin (epi-bis) type epoxy resin, novolak type epoxy resin, β-methylepichlorohydrin type epoxy resin, cyclic oxirane type epoxy resin, glycidyl ether type epoxy resin, glycidyl ester type epoxy resin, polyglycol ether type epoxy resin, glycol ether type epoxy resin, epoxidation fatty acid ester type epoxy resin, polycarboxylic acid ester type epoxy resin, aminoglycidyl type epoxy resin, and resorcin type epoxy resin.

The laminating adhesive may further contain typical acid anhydrides to enhance the acid resistance of an adhesive layer. Examples of the acid anhydrides include phthalic anhydride, succinic anhydride, HET anhydride, himic anhydride, maleic anhydride, tetrahydrophthalic anhydride, hexahydrophthalic anhydride, tetrabromophthalic anhydride, tetrachlorophthalic anhydride, trimellitic anhydride, pyromellitic anhydride, benzophenone tetracarboxylic acid anhydride, 2,3,6,7-naphthalene tetracarboxylic dianhydride, and 5-(2,5-oxotetrahydrofuryl)-3-methyl-3-cyclohexene-1,2-dicarboxylic anhydride.

Examples of a usable diluent include esters such as ethyl acetate, butyl acetate, and cellosolve acetate; ketones such as acetone, methyl ethyl ketone, isobutyl ketone, and cyclohexanone; ethers such as tetrahydrofuran and dioxane; aromatic hydrocarbons such as toluene and xylene; halogenated hydrocarbons such as methylene chloride and ethylene chloride; dimethyl sulfoxide; and dimethyl sulfoamide. Among these, a preferred diluent is normally ethyl acetate.

The adhesive may be applied by any traditional application technique and normally applied by a technique involving use of a gravure roller. The adhesive is applied in an amount ranging from 1.5 to 5 g/m², and preferably from 2 to 4 g/m² on a solid basis.

### EXAMPLES

Although the detail and advantages of the present invention will now be further specifically described with reference to Examples, the present invention is not limited thereto. The term "part" herein refers to "part by weight".

### [Preparation Example 1] Preparation of Polyol A-1

### (Phthalic acid: OPA, aromatic content: 3.0 mmol/g, polyester resin having a molecular weight Mn = 1500)

Phthalic anhydride (40.5 parts), sebacic acid (21.5 parts), ethylene glycol (11.4 parts), and neopentylglycol (26.6 parts) were put into a polyester reaction container having a stirrer, a thermometer, a nitrogen gas introduction tube, a rectifying tube, and a water separator. The temperature was gradually increased such that the temperature at the upper part of the rectifying tube did not exceed 100°C, and the internal temperature of the reaction container was held at 240°C. Esterification was terminated at an acid value of not more than 2.0 mgKOH/g to yield a polyester polyol. The polyester polyol was diluted with ethyl acetate to a nonvolatile content of 80% to produce a polyol A-1.

### [Preparation Example 2] Preparation of Polyol A-2

### (Phthalic acid: OPA, aromatic content: 3.5 mmol/g, polyester resin having a molecular weight Mn = 1500)

Phthalic anhydride (47.8 parts), sebacic acid (13.4 parts), ethylene glycol (11.7 parts), and neopentylglycol (27.1 parts) were put into a polyester reaction container having a stirrer, a thermometer, a nitrogen gas introduction tube, a rectifying tube, and a water separator. The temperature was gradually increased such that the temperature at the upper part of the rectifying tube did not exceed 100°C, and the internal temperature of the reaction container was held at 240°C. Esterification was terminated at an acid value of not more than 2.0 mgKOH/g to yield a polyester polyol. The polyester polyol was diluted with ethyl acetate to a nonvolatile content of 80% to produce a polyol A-2.

### [Preparation Example 3] Preparation of Polyol A-3

### (Phthalic acid: OPA, aromatic content: 2.5 mmol/g, polyester resin having a molecular weight Mn = 1500)

Phthalic anhydride (33.6 parts), sebacic acid (29.1 parts), ethylene glycol (11.2 parts), and neopentylglycol (26.1 parts) were put into a polyester reaction container having a stirrer, a thermometer, a nitrogen gas introduction tube, a rectifying tube, and a water separator. The temperature was gradually increased such that the temperature at the upper part of the rectifying tube did not exceed 100°C, and the internal temperature of the reaction container was held at 240°C. Esterification was terminated at an acid value of not more than 2.0 mgKOH/g to yield a polyester polyol. The polyester polyol was diluted with ethyl acetate to a nonvolatile content of 80% to produce a polyol A-3.

### [Preparation Example 4] Preparation of Polyol A-4

### (Phthalic acid: OPA, aromatic content: 2.0 mmol/g, polyester resin having a molecular weight Mn = 4000)

Phthalic anhydride (26.6 parts), sebacic acid (39.2 parts), ethylene glycol (10.3 parts), and neopentylglycol (23.9 parts) were put into a polyester reaction container having a stirrer, a thermometer, a nitrogen gas introduction tube, a rectifying tube, and a water separator. The temperature was gradually increased such that the temperature at the upper part of the rectifying tube did not exceed 100°C, and the internal temperature of the reaction container was held at 240°C. Esterification was terminated at an acid value of not more than 2.0 mgKOH/g to yield a polyester polyol. The polyester polyol was diluted with ethyl acetate to a nonvolatile content of 80% to produce a polyol A-4.

### [Preparation Example 5] Preparation of Polyol B

### (Phthalic acid: OPA, aromatic content: 1.8 mmol/g, polyester resin having a molecular weight Mn = 1500)

Phthalic anhydride (24.0 parts), sebacic acid (39.9 parts), ethylene glycol (10.9 parts), and neopentylglycol (25.2 parts) were put into a polyester reaction container having a stirrer, a thermometer, a nitrogen gas introduction tube, a rectifying tube, and a water separator. The temperature was gradually increased such that the temperature at the upper part of the rectifying tube did not exceed 100°C, and the internal temperature of the reaction container was held at 240°C. Esterification was terminated at an acid value of not more than 2.0 mgKOH/g to yield a polyester polyol. The polyester polyol was diluted with ethyl acetate to a nonvolatile content of 80% to produce a polyol B.

### [Preparation Example 6] Preparation of Polyol C

### (Phthalic acid: OPA, aromatic content: 2.5 mmol/g, polyester resin having a molecular weight Mn = 5000)

Phthalic anhydride (33.4 parts), sebacic acid (32.5 parts), ethylene glycol (11.5 parts), and neopentylglycol (22.6 parts) were put into a polyester reaction container having a stirrer, a thermometer, a nitrogen gas introduction tube, a rectifying tube, and a water separator. The temperature was gradually increased such that the temperature at the upper part of the rectifying tube did not exceed 100°C, and the internal temperature of the reaction container was held at 240°C. Esterification was terminated at an acid value of not more than 2.0 mgKOH/g to yield a polyester polyol. The polyester polyol was diluted with ethyl acetate to a nonvolatile content of 80% to produce a polyol C.

### [Preparation Example 7] Preparation of Polyol D

### (Phthalic acid: TPA, aromatic content: 3.0 mmol/g, polyester resin having a molecular weight Mn = 1500)

Terephthalic acid (43.9 parts), sebacic acid (19.8 parts), ethylene glycol (10.9 parts), and neopentylglycol (25.4 parts) were put into a polyester reaction container having a stirrer, a thermometer, a nitrogen gas introduction tube, a rectifying tube, and a water separator. The temperature was gradually increased such that the temperature at the upper part of the rectifying tube did not exceed 100°C, and the internal temperature of the reaction container was held at 240°C. Esterification was terminated at an acid value of not more than 2.0 mgKOH/g to yield a polyester polyol. The polyester polyol was diluted with ethyl acetate to a nonvolatile content of 80% to produce a polyol D.

### [Preparation Example 8] Preparation of Polyol E

### (Phthalic acid: IPA, aromatic content: 3.0 mmol/g, polyester resin having a molecular weight Mn = 1500)

Isophthalic acid (43.9 parts), sebacic acid (19.8 parts), ethylene glycol (10.9 parts), and neopentylglycol (25.4 parts) were put into a polyester reaction container having a stirrer, a thermometer, a nitrogen gas introduction tube, a rectifying tube, and a water separator. The temperature was gradually increased such that the temperature at the upper part of the rectifying tube did not exceed 100°C, and the internal temperature of the reaction container was held at 240°C. Esterification was terminated at an acid value of not more than 2.0 mgKOH/g to a yield polyester polyol. The polyester polyol was diluted with ethyl acetate to a nonvolatile content of 80% to produce a polyol E.

### [Preparation Example 9] Preparation of Polyol F

### (Phthalic acid: TPA/IPA = 45/55, aromatic content: 3.0 mmol/g, polyester resin having a molecular weight Mn = 1500)

Terephthalic acid (19.8 parts), isophthalic acid (24.1 parts), sebacic acid (19.8 parts), ethylene glycol (10.9 parts), and neopentylglycol (25.4 parts) were put into a polyester reaction container having a stirrer, a thermometer, a nitrogen gas introduction tube, a rectifying tube, and a water separator. The temperature was gradually increased such that the temperature at the upper part of the rectifying tube did not exceed 100°C, and the internal temperature of the reaction container was held at 240°C. Esterification was terminated at an acid value of not more than 2.0 mgKOH/g to yield a polyester polyol. The polyester polyol was diluted with ethyl acetate to a nonvolatile content of 80% to produce a polyol F.

### [Preparation Example 10] Preparation of Polyol G

### (Phthalic acid: TPA/IPA = 45/55, aromatic content: 2.5 mmol/g, polyester resin having a molecular weight Mn = 1500)

Terephthalic acid (16.3 parts), isophthalic acid (19.9 parts), sebacic acid (28.0 parts), ethylene glycol (10.8 parts), and neopentylglycol (25.0 parts) were put into a polyester reaction container having a stirrer, a thermometer, a nitrogen gas introduction tube, a rectifying tube, and a water separator. The temperature was gradually increased such that the temperature at the upper part of the rectifying tube did not exceed 100°C, and the internal temperature of the reaction container was held at 240°C. Esterification was terminated at an acid value of not more than 2.0 mgKOH/g to yield a polyester polyol. The polyester polyol was diluted with ethyl acetate to a nonvolatile content of 80% to produce a polyol G.

### (Examples 1 to 3)

Each of the polyol solutions produced in Preparation Examples 1 to 3 was blended with Sumidur N-3210 (aliphatic polyisocyanate commercially available from Sumika Bayer Urethane Co., Ltd.) as a curing agent at a ratio of hydroxyl group:isocyanate group = 1.0:1.2, and the product was diluted with ethyl acetate to a solid content of 60% to produce an adhesive composition. The adhesive composition was applied onto an ONy (biaxially stretched nylon) film with a test laminator (commercially available from Musashino Kikai Co., Ltd.) in an application amount of 3.0 g/m² (nonvolatile content) and then dried with a drier at a predetermined temperature of 70°C to evaporate the diluent solvent. The adhesive surface of the ONy film to which the adhesive composition had been applied was bonded to an LLDPE film into a laminated film 1 including two layers of ONy/LLDPE, and a laminated film 2 including two layers of ONy/CPP was similarly produced. Then, the laminated films were aged at 40°C for 3 days to cure the adhesive composition, thereby producing laminated films each having a two-layered structure. The following films were used.
ONy film: EMBLEM (15 µm) commercially available from UNITIKA LTD.
LLDPE film: TUX-HC (60 µm) commercially available from Mitsui Chemicals Tohcello, Inc.
CPP film: ZK-93K (70 µm) commercially available from TORAY ADVANCED FILM Co., Ltd.

### (Comparative Examples 1 to 6)

Except that the polyol solutions produced in Preparation Examples 5 to 10 were used in place of the polyol solutions produced in Preparation Examples 1 to 4, adhesive compositions were produced as in Examples 1 to 4, and laminated films having a two-layered structure were prepared with the adhesive compositions in the same manner as used in Examples 1 to 4.

The produced laminated films having a two-layered structure were subjected to the following evaluation.

### (1) Product Stability (appearance)

Each polyol solution held at 25°C for a month was visually observed.
Good: Retained
Bad: Clouded (crystallized)

### (2) Initial Viscosity

The viscosity of each adhesive composition prepared as described above was measured at 25°C with a #3 Zahn cup in terms of the number of seconds.
Good: Not less than 13 seconds and less than 20 seconds
Acceptable: Not less than 20 seconds and less than 30 seconds
Bad: Not less than 30 seconds

### (3) Viscosity after Aging

The viscosity of each adhesive composition which had been prepared as described above and then aged at 40°C for 6 hours was measured at 25°C with a #3 Zahn cup in terms of the number of seconds.
Good: Not less than 13 seconds and less than 30 seconds
Bad: Not less than 30 seconds

### (4) Initial Shear Strength

Each film immediately after a lamination process under the following conditions was subjected to measurement of shear strength with a tensile tester at an ambient temperature of 25°C and a peel rate of 5 mm/min.
Good: Not less than approximately 1 N/225mm²
Bad: Less than approximately 1 N/225mm²

### (5) Adhesion in Normal State

Each laminated film 1 after aging was subjected to a T-peel test with a tensile tester at an ambient temperature of 25°C and a peel rate of 300 mm/min to determine tensile strength, and the obtained tensile strength was employed to evaluate adhesion.
Good: Not less than 7 N/15mm
Bad: Less than 7 N/15mm

### (6) Boiling Resistance

Each laminated film 1 after aging was formed into a pouch having a size of 120 mm × 120 mm, and 70 g of a food sample containing vinegar, salad oil, and a meat sauce at a weight ratio of 1:1:1 was put into the pouch. The pouch was boiled for sterilization at 98°C for 60 minutes, and then the appearance of the pouch was evaluated by visual observation.
Good: No change in appearance
Bad: Delamination

### (7) Retort Resistance

Each laminated film 2 after aging was formed into a pouch having a size of 120 mm × 120 mm, and 70 g of a food sample containing vinegar, salad oil, and a meat sauce at a weight ratio of 1:1:1 was put into the pouch. The pouch was steamed for retort sterilization at 121°C for 30 minutes, and then the appearance of the pouch was evaluated by visual observation.
Good: No change in appearance
Bad: Delamination

Results of the evaluation are shown in Tables 1 and 2.

**[Table 1]**

| | Examples | | | |
|---|---|---|---|---|
| | 1 | 2 | 3 | 4 |
| Polyol | A-1 | A-2 | A-3 | A-4 |
| Polyisocyanate | H | H | H | H |
| Type and content of phthalic acid in primary ingredient | OPA=100 | OPA=100 | OPA=100 | OPA=100 |
| Total phthalic acid content in primary ingredient (unit: mmol/g) | 3.0 | 3.5 | 2.5 | 2.0 |
| Molecular weight (Mn) | 1500 | 1500 | 1500 | 4000 |
| Product stability (appearance) | Good | Good | Good | Good |
| Initial viscosity | Good | Good | Good | Good |
| Viscosity after aging | Good | Good | Good | Good |
| Initial shear strength | Good | Good | Good | Good |
| Adhesion in normal state | Good | Good | Good | Good |
| Boiling resistance | Good | Good | Good | Good |
| Retort resistance | Good | Good | Good | Good |

**[Table 2]**

| | Comparative Examples | | | | | |
|---|---|---|---|---|---|---|
| | 1 | 2 | 3 | 4 | 5 | 6 |
| Polyol | B | C | D | E | F | G |
| Polyisocyanate | H | H | H | H | H | H |
| Type and content of phthalic acid in primary ingredient | OPA= 100 | OPA= 100 | TPA= 100 | IPA= 100 | TPA/IPA= 45/55 | TPA/IPA= 45/55 |
| Total phthalic acid content in primary ingredient (unit: mmol/g) | 1.8 | 2.5 | 3.0 | 3.0 | 3.0 | 2.5 |
| Molecular weight (Mn) | 1500 | 5000 | 1500 | 1500 | 1500 | 1500 |
| Product stability (appearance) | Good | Good | Bad | Bad | Good | Good |
| Initial viscosity | Good | Bad | Bad | Bad | Bad | Acceptable |
| Viscosity after aging | Good | Bad | Bad | Bad | Bad | Bad |
| Initial shear strength | Bad | Good | Good | Good | Good | Bad |
| Adhesion in normal state | Bad | Good | Good | Good | Good | Good |
| Boiling resistance | Bad | Good | Good | Good | Good | Good |
| Retort resistance | Bad | Good | Good | Good | Good | Good |

### Industrial Applicability

The high-solid adhesive composition of the present invention can be appropriately used in a wide range of applications, such as food packaging materials, electronic components, and industrial products in which laminated films and composite materials produced as a result of bonding plastic films, metallic foil, and sheets are used.

## Claims

1. A two-part curable composition for a laminating adhesive, the two-part curable composition, being capable of being applied with not less than 50 mass% of a nonvolatile content, comprising a polyester polyol component as a primary ingredient and a polyisocyanate component as a curing agent, wherein the polyester polyol component is synthesized from at least any one of a polycarboxylic acid and a polycarboxylic anhydride, contains an aromatic ring derived from at least any one of orthophthalic acid and phthalic anhydride in an amount of not less than 2.0 millimoles per gram of solid content, and has a number-average molecular weight of not more than 4000.

2. The two-part curable composition for a laminating adhesive according to Claim 1, wherein the primary ingredient and the curing agent are blended such that the two-part curable composition has a solid content of not less than 50%, and the two-part curable composition has a viscosity at 25°C of 13 to 30 seconds measured with a #3 Zahn cup.

## Patentansprüche

1. Härtbare Zwei-Komponenten-Zusammensetzung für einen Laminierungsklebstoff, wobei die härtbare Zwei-Komponenten-Zusammensetzung in der Lage ist, mit nicht weniger als 50 Masse-% eines nichtflüchtigen Gehalts angewendet zu werden, umfassend eine Polyesterpolyolkomponente als primäres Ingrediens und eine Polyisocyanatkomponente als Härtungsmittel, wobei die Polyesterpolyolkomponente aus wenigstens einem einer Polycarbonsäure und einem Polycarbonsäureanhydrid synthetisiert ist, einen aromatischen Ring, abgeleitet von wenigstens einem von Orthophthalsäure und Phthalsäureanhydrid, in einer Menge von nicht weniger als 2,0 Millimol pro Gramm Feststoffgehalt enthält und ein zahlenmittleres Molekulargewicht von nicht mehr als 4000 hat.

2. Härtbare Zwei-Komponenten-Zusammensetzung für einen Laminierungsklebstoff gemäß Anspruch 1, wobei das primäre Ingrediens und das Härtungsmittel so gemischt werden, dass die härtbare Zwei-Komponenten-Zusammensetzung einen Feststoffgehalt von nicht weniger als 50% hat und die härtbare Zwei-Komponenten-Zusammensetzung eine Viskosität bei 25°C von 13 bis 30 Sekunden, gemessen mit einem #3-Zahn-Becher, hat.

## Revendications

1. Composition durcissable à deux composants pour un adhésif de stratification, la composition durcissable à deux composants pouvant être appliquée avec un contenu non volatile d'au moins 50% en masse, comprenant un composant polyester polyol en tant qu'ingrédient principal et un composant polyisocyanate en tant qu'agent durcisseur, dans laquelle le composant polyester polyol est synthétisé à partir d'au moins l'un quelconque d'un acide polycarboxylique et d'un anhydride polycarboxylique, contient un cycle aromatique dérivé d'au moins l'un quelconque de l'acide orthophthalique et de l'anhydride phthalique en une quantité d'au moins 2,0 millimoles par gramme de teneur en solide et a un poids moléculaire moyen en nombre non supérieur à 4000.

2. Composition durcissable à deux composants pour un adhésif de stratification selon la revendication 1, dans laquelle l'ingrédient principal et l'agent de durcissement sont mélangés de telle sorte que la composition durcissable à deux composants ait une teneur en solides d'au moins 50%, et la composition à deux composants ait à 25°C une viscosité de 13 à 30 secondes, qui est mesurée avec un coupe de Zahn #3.
